(19) Europäisches Patentamt
European Patent Office
Office européen des brevets

(11) Veröffentlichungsnummer: **0 307 811**
**A1**

(12) **EUROPÄISCHE PATENTANMELDUNG**

(21) Anmeldenummer: **88114750.8**

(51) Int. Cl.4: **C08G 65/30 , C08G 65/20**

(22) Anmeldetag: **09.09.88**

(30) Priorität: **15.09.87 DE 3730888**

(43) Veröffentlichungstag der Anmeldung:
**22.03.89 Patentblatt 89/12**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Müller, Herbert, Dr.**
**Carostrasse 53**
**D-6710 Frankenthal(DE)**

(54) **Verfahren zur Verminderung des Gehaltes an oligomeren cyclischen Ethern in Copolymerisaten aus Tetrahydrofuran und 1,2-Alkylenoxiden.**

(57) Verfahren zur Verminderung des Anteils von cyclischen oligomeren Ethern in Copolymerisaten aus Tetrahydrofuran und 1,2-Alkylenoxiden, bei dem man die Copolymerisate mit einem mittleren Molekulargewicht von 500 bis 4000 mit einem Gemisch aus Waser und einem Kohlenwasserstoff vermischt und die gereinigten Copolymerisate nach Phasentrennung aus der wäßrigen Phase isoliert.

EP 0 307 811 A1

# Verfahren zur Verminderung des Gehaltes an oligomeren cyclischen Ethern in Copolymerisaten aus Tetrahydrofuran und 1,2-Alkylenoxiden

Diese Erfindung betrifft ein Verfahren zur Verminderung des Anteils von cyclischen oligomeren Ethern in Copolymerisaten aus Tetrahydrofuran und 1,2-Alkylenoxiden durch eine extraktive Behandlung mit einem Gemisch aus Wasser und einem Kohlenwasserstoff.

Durch Copolymerisation von Tetrahydrofuran (THF) und 1,2-Alkylenoxiden erhält man Polyoxibutylen-polyoxialkylen-glykole, die wertvolle Ausgangsstoffe für Polyurethane darstellen. Man stellt diese Copolymerisate z.B. nach dem in der GB-PS 854 958 beschriebenen Verfahren her. Nachteil dieses und anderer Verfahren ist, daß bei der Copolymerisation von THF mit den Alkylenoxiden stets erhebliche Anteile an niedermolekularen Produkten gebildet werden.

Diese Nebenprodukte bestehen aus oligomeren cyclischen Ethern, deren Anteil im Copolymerisat bis zu 20 Gew.% betragen kann. Sie sind aus mehreren Gründen unerwünscht. So stören sie als inerte Verbindungen bei der Weiterverarbeitung der Polymerisate, die man z.B. mit Isocyanaten zu Polyurethanen umsetzt. Sie wirken wie Weichmacher und senken meistens das mechanische Niveau der Fertigprodukte. Sie können auch an der Oberfläche der Fertigprodukte ausschwitzen oder von Lösungsmitteln herausgelöst werden, worunter z.B. die Formstabilität der Fertigerzeugnisse leidet.

Es hat deshalb nicht an Versuchen gefehlt, den Gehalt an oligomeren cyclischen Ethern in den Copolymerisaten zu reduzieren. So wird z.B. in der EP-A 6107 der Vorschlag gemacht, die Copolymerisate bei höherer Temperatur mit einem aktivierten Montmorillonit zu behandeln. Bei diesem Verfahren, bei dem die oligomeren cyclischen Ether einer aufwendigen Depolymerisation in Gegenwart der erwünschten Polymerisate unterworfen werden, wird eine quantitative Entfernung der cyclischen Ether nicht erreicht. Zur Vermeidung dieser Nachteile wird in der US-PS 4 127 513 der Vorschlag gemacht, als Katalysator einen besonders aktivierten Montmorillonit zu verwenden.

Nachteilig sind bei diesem Prozeß die hohe Farbzahl der Polymerisate, eine verhältnismäßig geringe Polymerisationsgeschwindigkeit und ein Anteil an oligomeren cyclischen Ethern, der immer noch 5 bis 6 Gew.% beträgt. Nach den Angaben der US-PS 4 228 272 wird für die Copolymerisation von Alkylenoxiden mit THF als Katalysator eine Bleicherde mit bestimmtem spezifischen Porenvolumen und Porendurchmesser sowie definierter Oberfläche verwendet.

Nach diesem Verfahren sollen Produkte mit verbesserter Farbzahl bei erhöhter Polymerisationsgeschwindigkeit erhalten werden. Ihr Oligomerengehalt ist aber mit etwa 4 Gew.% für die Anwendung der Copolymeren zur Herstellung von Polyurethanen, an die höhere mechanische Ansprüche gestellt werden, zu hoch.

Bekanntlich liefern alle Verfahren zur Copolymerisation von Alkylenoxiden mit THF in Gegenwart von Bleicherden hochmolekulare Copolymere mit endständigen Hydroxylgruppen, die stets durch einen mehr oder weniger hohen Gehalt an makrocyclischen Polyethern ohne Hydroxylgruppen verunreinigt sind. Es wurden deshalb auch Vorschläge gemacht, die cyclischen Ether durch eine Extraktion der Copolymerisaten mit Kohlenwasserstoffen, Wasser oder überkritischen Gasen sowie durch Molekulardestillation und durch eine Kombination dieser Verfahren zu entfernen (US-Patentschriften 4 500 705, 4 251 654, 4 306 058 und EP-B 4 273).

In der DE-OS 3 346 136 wird ein Verfahren zur Copolymerisation von Alkylenoxiden und THF beschrieben, bei dem sich der Anfall an cyclischen oligomeren Ethern dadurch unter 2 Gew.% zurückdrängen läßt, daß man kontinuierlich in einem Reaktor polymerisiert und dem im Kreis geführten Reaktionsgemisch weniger als 30 Gew.% an Frischzulauf aus THF und 1,2-Alkylenoxid zuführt. Bei diesem Verfahren ist nachteilig, daß Polymerisate gebildet werden, die eine breite Molekulargewichtsverteilung aufweisen.

Nach den Angaben in der EP-B 4 356 werden die Copolymeren einer Molekulardestillation unterworfen, wodurch sich die cyclischen oligomeren Ether auf einen Gehalt von unter 5 Gew.% reduzieren lassen. Nachfolgend wird dann durch Extraktion mit Wasser erreicht, daß dieser Gehalt auf Werte unter 1 Gew.% vermindert wird. Da die Copolymeren mit mittleren Molekulargewichten von über 400 recht hochviskose Flüssigkeiten sind, wird in der EP-B 4 356 empfohlen, die Copolymerisate mit wasserunlöslichen organischen Lösungsmittel, wie Xylol oder Toluol zu verdünnen. Aus diesen Lösungen werden die oligomeren Ether dann mit Wasser extrahiert (vgl. Spalte 4, Zeile 39 bis 35). Im Gegensatz hierzu lehrt die US-PS 4 500 705, daß man die cyclischen Ethern aus den Copolymerisaten durch Extraktion mit aliphatischen oder cycloalipahtischen Kohlenwasserstoffen mit 6 bis 8 Kohlenstoffatomen entfernen kann. Allerdings ist eine mehrmalige Extraktion mit einer großen Menge Kohlenwasserstoff notwendig. So ist dem Beispiel zu entnehmen, daß mit der 10-fachen Menge Heptan bei zweimaliger Extraktion nur ein Restgehalt an

cyclischen Ethern von 1,44 Gew.% erreicht wird.

In der EP-B 202 487 wird ein Verfahren zur Verringerung des Anteils von cyclischen oligomeren Ethern in THF-Polymerisaten und Copolymerisaten beschrieben, bei dem man Polymerisate dieser Art mit einem Molekular gewicht von 200 bis 450 mit einem Gemisch aus Wasser und einem Kohlenstoff vermischt, wobei man die gereinigten Polymerisate nach Phasentrennung aus der wäßrigen Phase gewinnt.

Es wurde nun gefunden, daß man den Anteil an cyclischen oligomeren Ethern in Copolymerisaten aus THF und 1,2-Alkylenoxiden durch eine Lösungsmittelbehandlung der Copolymerisate mit erheblich besseren Ergebnissen vermindern kann, wenn man die die oligomeren cyclischen Ether enthaltenden Copolymerisate, die ein mittleres Molekulargewicht von 500 bis 4000 aufweisen, mit einem Gemisch aus Wasser und einem Kohlenwasserstoff, der Halogenatome und/oder Alkoxigruppen enthalten kann, vermischt und die gereinigten Copolymerisate nach Phasentrennung aus der wäßrigen Phase isoliert.

Die zu behandelnden Copolymerisate sind Polyoxibutylen-polyoxialkylenglykole, die z.B. auf bekannte Weise durch Copolymerisation von THF mit 1,2-Alkylenoxiden, wie Ethylenoxid, erhältlich sind und die ein mittleres Molekulargewicht von 500 bis 4000, insbesondere 800 bis 2000 aufweisen. Sie haben einen Gehalt an oligomeren cyclischen Ethern von 1 bis 20 Gew.%. Ihre Herstellung wird u.a. in der GB-PS 854 958 und der DE-OS 3 346 136 beschrieben.

Das erfindungsgemäße Verfahren ermöglicht es, den Anteil der oligomeren cyclischen Ether, die man auch als Kronenether bezeichnet und die den allgemeinen Formeln

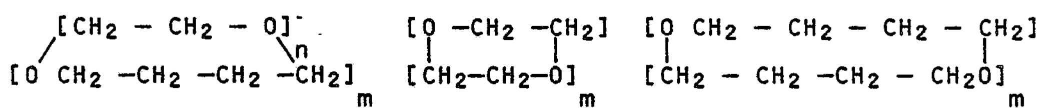

(mit n = 1,2 und 3 und m = 2,3, 4,5, 6,7 und 8)

entsprechen, auf einfache und ökonomisch vorteilhafte Weise unter die Nachweisbarkeitsgrenze zu reduzieren. Eine Methode zur Bestimmung der Konzentration an oligomeren cyclischen Ether ist z.B. in der EP-B 4 356 (Spalte 5 bis 8) beschrieben.

Als Kohlenwasserstoffe sind für das Verfahren der Erfindung sowohl gesättigte als auch ungesättigte aliphatische, cycloaliphatische oder aromatische Verbindungen geeignet. Aromatische Kohlenwasserstoffe mit Alkylsubstituenten ($-C_nH_{2n+1}$ ) mit n vorzugsweise > 2 sind besonders gut geeignet. Die Kohlenwasserstoffe können Substituenten, wie Halogenatome oder Alkoxigruppen enthalten. Obwohl man solche Kohlenwasserstoffe bevorzugt, die bei Raumtemperatur flüssig sind, kann man, wenn man die Unbequemlichkeit der Druckarbeitsweise in Kauf nehmen will, auch mit tiefer siedenden Kohlenwasserstoffen mit zum Teil noch besserem Erfolg arbeiten. Es ist auch möglich, Gemische von Kohlenwasserstoffen zu verwenden. Beispielsweise werden die folgenden Kohlenwasserstoffe genannt: Alkane mit 2 bis 12 C-Atomen, wie Propan, n-Butan, Iso-butan, Pentan, Hexan und Dekan, Alkene, wie Propen, Iso-buten, Penten und Isohexen, Aromaten wie Ethyl- oder Dipropylbenzol, Cycloaliphaten, wie Cyclohexan und Dekalin.

Man vermischt den polymeren Ausgangsstoff mit Wasser und dem Kohlenwasserstoff im allgemeinen bei Normaldruck und bei Temperaturen bis 120 °C, vorzugsweise bei 15 bis 50 °C. Das Verhältnis Wasser zu Kohlenwasserstoff ist in weiten Grenzen variierbar. Beispielsweise beträgt das Gewichtsverhältnis Wasser zu Kohlenwasserstoff 1:5 bis 1:100, vorzugsweise 1:10 bis 1:30. Dagegen wird das Gewichtsverhältnis Copolymerisat zu Wasser in verhältnismäßig engen Grenzen gewählt. Es liegt in den Grenzen 4:1 bis 100:1, vorzugsweise zwischen 15:1 bis 7:1. Man vermischt die Einsatzstoffe in an sich üblichen Rührgefäßen. Die Rührzeit beträgt je Extraktionsstufe etwa 1 bis 30 Minuten. Nach dem Vermischen trennt man die gebildeten beiden Phasen. Bereits bei einer Extraktionsstufe wird eine weitgehende Verminderung des Anteils der cyclischen oligomeren Ether erreicht, so daß die Polyoxibutylen-polyoxialkylen-glykole in einer Reinheit von über 99 % aus der spezifisch schwereren, der wäßrigen Phase gewonnen werden können. Je nach dem Gehalt der zu extrahierenden cyclischen oligomeren Ether in den Copolymerisaten kann man auch mehrere Extraktionsschritte durchführen. Im allgemeinen extrahiert man in einer bis fünf Stufen, wobei man bei der mehrstufigen Extraktion den Kohlenwasserstoff aus der vorangegangenen Extraktion zurückgewinnt und erneut verwendet. Dabei gelingt es, den Gehalt an den unerwünschten cyclischen Ethern bis unter die Nachweisgrenze zu erniedrigen. Nach der Extraktion durch Vermischen trennt man die wasserhaltige Phase von der Kohlenwasserstoff-Phase und isoliert die gereinigten Polyoxibutylen-polyoxialkylenglykole aus der wäßrigen Phase, z.B. durch Abdampfen des Wassers. Die cyclischen oligomeren Ether isoliert man aus der organischen Phase, z.B. ebenfalls durch Destillation. So lassen sich nicht nur die polymeren Glykole, sondern auch die Kronenether in reiner Form gewinnen. Die Extraktion kann schließlich auch in kontinuierlicher Arbeitsweise so vorgenommen werden, daß z.B. das Gemisch aus Copolyetherglykol-

kol und Wasser im Gegenstrom dem Kohlenwasserstoff z.B. über eine Füllkörpersäule entgegengeführt wird.

Mit dem erfindungsgemäßen Verfahren wird ein besonders hoher Extraktionsgrad erzielt. Das bedeutet, daß man ein weitgehend von cyclischen, oligomeren Ethern befreites Polymerisat mit Hilfe einer im Vergleich zu den bekannten Extraktionsverfahren, geringen Menge an Extraktionsmittel erhält. Insgesamt isoliert man die zu trennenden Bestandteile in hoher Reinheit auf besonders wirtschaftliche Weise. Dieses vorteilhafte Ergebnis ist sehr überraschend. Man hat den Gehalt an oligomeren cyclischen Ethern in solchen Copolymerisaten zwar schon durch eine mehrmalige Extraktion mit Kohlenwasserstoffen vermindert (US-PS 4 500 705). Andererseits werden aber von oligomeren cyclischen Ethern weitgehend befreite Copolymerisate aus THF und Ethylenoxid durch eine Extraktion der Ausgangsstoffe mit Wasser gewonnen, wobei sich die cyclischen oligomeren Ether in der Wasserphase anreichern (US-PS 4 251 654). Nach den Angaben in der EP-B 4 356 (s. Spalte 4, Zeilen 25-45) werden die oligomeren cyclischen Ether ebenfalls mit Wasser, und zwar sogar aus einer Lösung des Copolymerisats in einem aromatischen Kohlenwasserstoff, wie Xylol oder Toluol, extrahiert. Es hat auch nicht nahegelegen, das in der EP-B 202 487 beschriebene auf THF-Copolymerisate mit Molekulargewichten bis 450 angewendete Extraktionsverfahren auf Copolymerisate mit höheren Molekulargewichten zu übertragen, da die bei diesem bekannten Verfahren verwendeten aromatischen Kohlenwasserstoffe mit den Copolymerisaten Lösungen bilden, aus denen die cyclischen oligomeren Ether mit Wasser extrahiert werden (EP-B 4 356). Die erfindungsgemäße Extraktion ist, wie sich überraschend gezeigt hat, erheblich wirkungsvoller als eine Extraktion von Lösungen der Copolymerisate in aromatischen Kohlenwasserstoffen mit Wasser.

Die in den Beispielen genannten Teile sind Gewichtsteile. Sie verhalten sich zu Volumenteilen wie das Kilogramm zum Liter.

## Beispiel 1

100 Teile eines THF/Ethylenoxid-Mischpolymerisates, das wie in der GB-PS 854 958 beschrieben hergestellt wurde und 18 Gew.% Ethylenoxid enthielt, war mit 16 Gew.% oligomeren cyclischen Ethern verunreinigt. Das Polymerisat hatte ein mittleres Molekulargewicht (aus der Hydroxylzahl berechnet) von 1250. Das Polymerisat wurde mit 12 Teilen Wasser und 60 Teilen n-Heptan bei 25°C innig gemischt. Danach überläßt man das Gemisch der Phasentrennung. Aus der oberen Phase wurde das n-Heptan bei Normaldruck und im Vakuum abgedampft. Dabei wurden 16 Teile oligomere cyclische Ether, die ein kryoskopisch bestimmtes mittleres Molekulargewicht von ca. 270 aufwiesen, erhalten. Durch Bestimmung der Hydroxylzahl, die zwischen 1 bis 2 mg KOH/g lag, wurde nachgewiesen, daß die cyclischen Ether weitgehend frei von Polyoxibutylen-polyoxialkylenglykolen waren. Aus der unteren wäßrigen Phase erhielt man durch Eindampfen 84 Teile Copolymerisat mit dem mittleren Molekulargewicht von 1490 (aus der Hydroxylzahl berechnet). Der Gehalt an cyclischen Ethern im polymeren Glykol lag unter 0,5 Gew.%.

## Beispiel 2 (Vergleich)

Die im Beispiel 1 beschriebene Arbeitsweise wurde wiederholt, wobei jedoch kein Wasser, sondern als Extraktionsmittel entsprechend dem Beispiel der US-PS 4 500 705 200 Teile n-Heptan verwendet wurden. Dabei wurde ein Polymerisat mit einem Gehalt an oligomeren cyclischen Ethern von 4 Gew.% erhalten. Durch 2-maliges Extrahieren mit Heptan wurde ein Copolymerisat erhalten, dessen Gehalt an oligomeren cyclischen Ethern mit dem in Beispiel der US-PS 4 500 705 beschriebenen Wert von 1,44 % übereinstimmte.

## Beispiel 3 (Vergleich)

Das für Beispiel 1 herangezogene Copolymerisat wurde nach Beispiel 1 der US-PS 4 251 654 einstufig mit Wasser extrahiert. Dadurch wurde der Gehalt an oligomeren cyclischen Ethern im Polymerisat von 16 auf 3 Gew.% reduziert.

Beispiel 4

Das für Beispiel 1 eingesetzte Polymerisat wurde nach der wie folgt beschriebenen kontinuierlichen Methode behandelt. Es wurde eine einfache Extraktionssäule (1) verwendet, wie sie der Abbildung zu entnehmen ist. Die Säule war mit 10 mm Raschigringen gefüllt. n-Heptan wurde der Extraktionssäule über die Zuleitung (2) durch eine Lochplatte (3) kontinuierlich mit einer Geschwindigkeit von ca. 5 l/h zugeführt. Die schwerere Phase, die aus 11 Gew.% Wasser und 89 Gew.% Copolymerisat bestand, wurde der Säule über die Zuleitung (4) mit einer Geschwindigkeit von 12 l/h zugeführt. Während die obere Phase über die Ableitung (5) frei ablief, wurde die untere Phase kontinuierlich im Maße ihres Anfalles über die Ableitung (6) abgezogen. Die obere Phase bestand aus 84 Gew.% n-Heptan und 16 Gew.% oligomerer cyclischer Ether. Aus ihr wurde durch eine einstufige Eindampfung in einem Film-Verdampfer das eingesetzte Heptan zurückerhalten, das in die Extraktionsstufe quantitativ zurückgeführt wurde. Die untere Phase, die aus wasserhaltigem Copolymerisat bestand, wurde im Vakuum getrocknet. Sie war frei von jeglichem Gehalt an oligomeren cyclischen Ethern. Das mittlere Molekulargewicht des so gereinigten Polymerisates betrug 1 487.

## Ansprüche

1. Verfahren zur Verminderung des Anteils von cyclischen oligomeren Ethern in Copolymerisaten aus Tetrahydrofuran und 1,2-Alkylenoxiden durch eine Lösungsmittelbehandlung der Copolymerisate, dadurch gekennzeichnet, daß man die die oligomeren cyclischen Ether enthaltenden Copolymerisate, die ein mittleres Molekulargewicht von 500 bis 4000 aufweisen, mit einem Gemisch aus Waser und einem Kohlenwasserstoff, der Halogenatome und/oder Alkoxigruppen enthalten kann, vermischt und die gereinigten Copolymerisate nach Phasentrennung aus der wäßrigen Phase isoliert.

2. Verfahren nach Anspruch 1, dadurch gekennzeichnet, daß man als Kohlenwasserstoffe offenkettige aliphatische Kohlenwasserstoffe verwendet.

3. Verfahren nach Anspruch 1, dadurch gekennzeichnet, daß man als Kohlenwasserstoffe Nonane, Dekane, Undekane oder Dodekane verwendet.

4. Verfahren nach Anspruch 1, dadurch gekennzeichnet, daß man als Kohlenwasserstoffe durch Alkylgruppen substituierte Aromaten verwendet.

5. Verfahren nach Anspruch 1, dadurch gekennzeichnet, daß man die Copolymerisate mit Wasser und dem Kohlenwasserstoff bei Temperaturen bis 120 °C vermischt.

6. Verfahren nach Anspruch 1, dadurch gekennzeichnet, daß in dem Lösungsmittelgemisch das Gewichtsverhältnis Wasser zu Kohlenwasserstoff 1:5 bis 1:100 beträgt und daß ein Gewichtsverhältnis Copolymerisat zu Wasser von 4:1 bis 100:1 eingehalten wird.

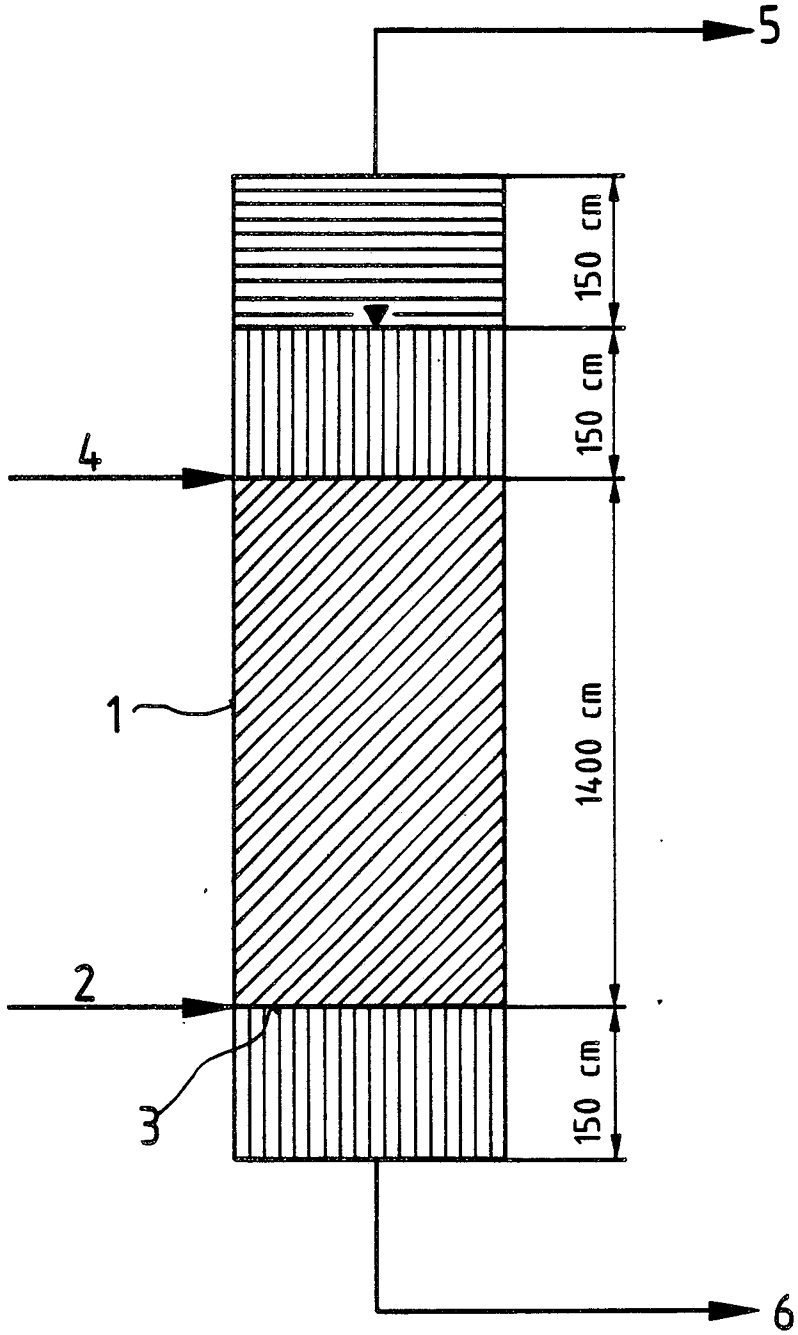
5
150 cm
150 cm
4
1
1400 cm
2
3
150 cm
6

Europäisches Patentamt

# EUROPÄISCHER RECHERCHENBERICHT

Nummer der Anmeldung

EP 88 11 4750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 202 487 (BASF)<br>* Spalte 3, Zeile 37 - Spalte 6, Zeile 7; Ansprüche * | 1-6 | C 08 G 65/30<br>C 08 G 65/20 |
| P,X | EP-A-0 236 995 (BASF)<br>* Ansprüche; Spalte 4, Zeilen 37-45 * | 1-5 | |
| Y | PATENT ABSTRACTS OF JAPAN<br>Band 9, Nr. 171 (C-291) (1894) 16. Juli 1985, & JP - A - 60 42421 (MITSUBISHI KASEI KOGYO KK) 06-03-1985 | 1-5 | |
| Y | DE-B-2 210 856<br>(MARLES-KUHLMANN-WYANDOTYE)<br>* Ansprüche; Spalte 4, Zeilen 33-56; Spalte 5, Zeilen 26-40 * | 1-5 | |
| D,A | EP-A-0 004 356 (DU PONT DE NEMOURS)<br>* Beispiel 4; Seite 4, Zeile 30 - Seite 6, Zeile 18 * | 1 | |
| D,A | US-A-4 500 705 (H. COPELIN)<br>* Ansprüche; Beispiel * | 1-3 | RECHERCHIERTE SACHGEBIETE (Int. Cl.4) |
| D,A | US-A-4 251 654 (I. ROBINSON et al.)<br>* Anspruch 5; Beispiel 1 * | 1 | C 08 G 65/00 |

Der vorliegende Recherchenbericht wurde für alle Patentansprüche erstellt

| Recherchenort | Abschlußdatum der Recherche | Prüfer |
|---|---|---|
| BERLIN | 05-12-1988 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)